# EUROPÄISCHE PATENTSCHRIFT

(11) **EP 1 385 184 B1**
(45) Veröffentlichungstag und Bekanntmachung des Hinweises auf die Patenterteilung: **25.10.2006**
(21) Anmeldenummer: 03015235.9
(22) Anmeldetag: 05.07.2003
(51) Int. Cl.: H01H 3/16, A47J 27/21

(54) **Vorrichtung zum Erwärmen von Flüssigkeiten**
Device for heating of liquids
Dispositif pour le chauffage de liquides

(30) Priorität: 23.07.2002 DE 20211099 U
(43) Veröffentlichungstag der Anmeldung: 28.01.2004
(73) Patentinhaber: WIK Far East Ltd., North Point, Hong Kong (CN)
(72) Erfinder: Lüke,Werner, 44789 Bochum (DE)
(74) Vertreter: Haverkamp, Jens

(56) Entgegenhaltungen:
- EP-A- 0 303 886
- GB-A- 2 303 977
- GB-A- 2 361 815

## Beschreibung

Die Erfindung betrifft eine Vorrichtung zum Erwärmen von Flüssigkeiten, gemäß dem Oberbegriff der Ansprüche 1 und 4.

Derartige Vorrichtungen werden auch als Wasserkocher bezeichnet und umfassen einen schnurlosen Flüssigkeitsbehälter, der von einer Basisstation abnehmbar ist. Die Basisstation ist an eine Spannungsquelle angeschlossen. Miteinander in Eingriff stellbare Steckverbindungsteile, von denen eines dem Flüssigkeitsbehälter und das andere als Gegensteckverbindungsteil der Basisstation zugeordnet sind, gewährleisten eine Stromversorgung einer in dem Flüssigkeitsbehälter angeordneten elektrischen Tauchheizeinrichtung. Dem Behälter ist ferner eine Steuereinheit zugeordnet, mit der die Heizeinrichtung ein- und ausgeschaltet werden kann. Ferner umfaßt eine solche Steuereinheit eine Abschaltautomatik, durch die die elektrische Stromversorgung der Heizeinrichtung unterbrochen wird, wenn die in dem Flüssigkeitsbehälter befindliche Flüssigkeit kocht. Üblicherweise bildet die Tauchheizenrichtung und die Steuereinheit mit dem elektrischen Steckverbindungsteil zum Kontaktieren des Gegensteckverbindungsteils eine konstruktive Einheit, die eingesetzt ist beispielsweise in einen Behälter aus Kunststoff. Diese konstruktive Einheit ist im unteren Bereich der Seitenwand des Behälters angeordnet, so dass die Tauchheizeinrichtung von der Seite her in das Behälterinnere eingreift. Als Schalteranordnung ist in aller Regel ein EIN-Schalter vorgesehen, mit dem die Vorrichtung einschaltbar ist. Eine Abschaltung kann selbsttätig durch die Abschaltautomatik erfolgen, die überlicherweise über einen Bimetall gesteuert ist. Gleichwohl sind auch Wasserkocher bekannt geworden, deren Steuereinheit mit einer Schalteranordnung ausgerüstet ist, die zusätzlich auch manuell in ihre AUS-Stellung schaltbar ist. Ein Wasserkocher der beschriebenen Art ist beispielsweise aus EP 0 719 464 B1 bekannt.

Diese Wasserkocher bergen jedoch bei einer Benutzung derselben die Gefahr in sich, dass nach Einschalten der Tauchheizeinrichtung und nach Abheben des Flüssigkeitsbehälters von der Basisstation zwar die zum Betreiben der Tauchheizeinrichtung notwendige Stromversorgung infolge einer Trennung der beiden zunächst in Eingriff stehenden Steckverbindungsteile unterbrochen ist, dass jedoch nach erneutem Aufsetzen des Flüssigkeitsbehälters auf die Basisstation durch das in Eingriffstellen der beiden Steckverbindungsteile die Heizeinrichtung eingeschaltet ist. Da derartige Wasserkocher mitunter zwar mit einer Trockenüberhitzungsabschaltautomatik ausgestattet sind, diese jedoch mit zunehmender Kalkablagerung mitunter nur verzögert anspricht, wäre es wünschenswert, wenn ein solcher Wasserkocher nicht in eingeschaltetem Zustand auf die zugehörige Basisstation aufgesetzt werden könnte.

Aus WO 01/56437 A2 ist eine Steuereinheit für einen Wasserkocher beschrieben, bei der die Schalteranordnung zum Ein- und Ausschalten der Heizeinrichtung beim Abheben des Flüssigkeitsbehälters von der Basisstation aktiv ausgeschaltet wird. Diese Steuereinheit dient zum Betreiben einer unter dem Boden des Flüssigkeitsbehälters angeordneten Widerstandsheizeinrichtung. Ein sich radial von der Steuereinheit wegerstrekkender Hebel trägt an seinem freien Ende einen Bedienknopf, durch den die Heizeinrichtung einschaltbar ist. Dieser Hebel, dessen Bedienknopf als Bedienelement angesprochen werden kann, ist durch Herabdrücken in seine EIN-Stellung schaltbar. Um bei einem mit einer solchen Steuereinheit ausgerüsteten Wasserkocher sicherzustellen, dass bei einem Abheben des Wasserkochers von der Basisstation eine Stromunterbrechung herbeigeführt wird, sind die vorgesehenen elektrischen Kontakte der Steuereinheit unter Federvorspannung stehend ausgestaltet. Diese stehen bei auf der Basisstation aufgesetztem Flüssigkeitsbehälter durch das Eigengewicht des Flüssigkeitsbehälters unter Vorspannung und werden aufgrund der in dem Federelementen gespeicherten Energie geöffnet, sobald der Flüssigkeitsbehälter von der Basisstation abgehoben wird. Ein AUS-Schalten erfolgt somit durch unmittelbares Betätigen der elektrischen Kontakte.

Die aus diesem Dokument bekanntgewordene Steuereinheit kann jedoch nicht für solche Wasserkocher eingesetzt werden, die mit einer sich von einer Seitenwand in den Behälter hineinerstreckenden Tauchheizeinrichtung ausgerüstet sind. Überdies ist die beschriebene Abschaltautomatik beim Abheben des Flüssigkeitsbehälters von der Basisstation aufwendig bezüglich ihrer Realisierung.

Eine weitere Vorrichtung ist aus der EP0303886 bekannt.

Ausgehend von diesem diskutierten Stand der Technik liegt der Erfindung daher die Aufgabe zugrunde, eine eingangs genannte, gattungsgemäße Vorrichtung zum Erwärmen von Flüssigkeiten dergestalt weiterzubilden, dass diese insbesondere auch unabhängig von der Art der eingesetzten Heizeinrichtung mit einer Abschaltautomatik zum Abschalten der Stromversorgung der Heizeinrichtung beim Abheben des Flüssigkeitsbehälters von der Basisstation ausgerüstet werden kann, und dieses insbesondere mit einfachem konstruktivem Aufwand realisierbar ist.

Diese Aufgabe wird erfindungsgemäß durch die Merkmale des kennzeichnenden Teils der Ansprüche 1 und 4 gelöst.

Bei dieser Vorrichtung, die beispielsweise als Wasserkocher ausgebildet sein kann, ist die Abschaltautomatik zum Abschalten der Heizeinrichtung bei einem Abheben des Flüssigkeitsbehälters von der Basisstation dergestalt konzipiert, dass das ohnehin vorhandene Bedienelement der Schalteranordnung zum Ein- und Ausschalten der Heizeinrichtung eingesetzt wird, um die Steuereinheit bei dem genannten Vorgang auszuschalten und die gewünschte Stromunterbrechung herbeizuführen. Damit entfällt grundsätzlich die Konzeption zusätzlicher, auf die elektrischen Kontakte einwirkender Mechaniken. Zu diesem Zweck verfügt die Vorrichtung über ein Betätigungsglied, welches auf das Bedienelement der Schalteranordnung dergestalt mechanisch einwirkend angeordnet ist, dass beim Abheben des Flüssigkeitsbehälters von der Basisstation das Bedienelement zwangsweise in seine AUS-Stellung bewegt und somit die Schalteranordnung in ihre AUS-Stellung geschaltet wird. Das Bedienelement der Schalteranordnung ist zu diesem Zweck in Richtung zum unteren Abschluß des Behälters in seine AUS-Stellung bewegbar gelagert, wobei das Bedienelement sowohl verschiebbar als auch verschwenkbar gelagert sein kann. Durch das Betätigungsglied ist somit eine mechanische Zwangskopplung zwischen der AUS-Schaltbewegung des Bedienelementes und der Abhebebewegung des Flüssigkeitsbehälters von der Basisstation hergestellt. Durch das Betätigungsglied ist somit sichergestellt, dass zumindest beim Abheben des Flüssigkeitsbehälters über das Bedienelement die Schalteranordnung in ihre AUS-Stellung geschaltet wird. Je nach Ausgestaltung des Betätigungsgliedes kann ferner vorgesehen sein, dass ein Einschalten der Steuereinheit bei nicht auf der Basisstation aufgesetztem Flüssigkeitsbehälter zumindest dauerhaft verhindert ist und/oder dass beim Vorgang des Aufsetzens des Flüssigkeitsbehälters auf die Basisstation eine Zwangsausschaltung der Steuereinheit wie bei dem Abhebevorgang erfolgt.

Gemäß einer ersten Ausgestaltung ist vorgesehen, dass als Betätigungsglied eine Schaltfeder eingesetzt ist, die sich bei auf der Basisstation aufgesetztem Behälter an dieser abstützt und durch diese Abstützung in ihrer gespannten Stellung gehalten ist. Die in dieser Stellung in der Schaltfeder gespeicherte Energie wird beim Abheben des Flüssigkeitsbehälters freigesetzt und genutzt, um das Bedienelement in seine AUS-Stellung zu bewegen und somit die Schalteranordnung in ihrer AUS-Stellung zu schalten. Die Schaltfeder weist zu diesem Zweck - wie in einem Ausführungsbeispiel vorgesehen - einen das Bedienelement oberseitig umgreifenden Stellabschnitt auf, der beispielsweise rahmenartig ausgebildet sein kann, an dem unterseitig ein Abstützabschnitt zum Bewirken der gewünschten Abstützung bei auf der Basisstation aufgesetztem Flüssigkeitsbehälter angeformt ist. Zum Speichern der benötigten Energie sind an dem Stellabschnitt zweckmäßigerweise zwei Federabschnitte angeformt, die in Richtung der Längserstreckung des Stellabschnittes wirkende Federeigenschaften aufweisen.

Gemäß einer weiteren Ausgestaltung können als Betätigungsglied ein oder mehrere federelastisch Schaltrippen vorgesehen sein, die bei auf der Basisstation aufgesetztem Flüssigkeitsbehälter das Bedienelement oberseitig zumindest teilweise übergreifen. Beim Aufsetzen des Flüssigkeitsbehälters auf die Basisstation werden die Schaltrippen durch ein Element der Basisstation, beispielsweise die Energieversorgungseinheit seitlich weggedrückt, um eine Bewegung des Bedienelementes von seiner AUS-Stellung in seine EIN-Stellung zu gestatten. Beim Abheben des Flüssigkeitsbehälters und somit beim Entfernen der die Schaltrippen auseinander spreizenden Einheit der Basisstation drücken diese das Bedienelement zwangsweise von seiner EIN-Stellung in seine AUS-Stellung. Die Schaltrippen selbst können aus Kunststoff hergestellt und Teil eines dem Flüssigkeitsbehälter zugeordneten Montagemoduls sein.

Nachfolgend ist die Erfindung anhand von Ausführungsbeispielen unter Bezugnahme auf die beigefügten Figuren beschrieben. Es zeigen:
- **Fig.1:**: Einen schematisierten Längsschnitt durch einen nicht erfindungsgemäßen schnurlosen Wasserkocher mit einem Betätigungsglied zum zwangsweisen Ausschalten der Heizeinrichtung des Wasserkochers beim Abnehmen desselben von einer Basisstation,
- **Fig.2:**: eine dreidimensionale Darstellung des Betätigungsgliedes des Wasserkochers der Figur 1,
- **Fig. 3:**: einen Ausschnitt aus der Darstellung des Wasserkochers der Figur 1, darstellend eine Situation beim Abheben des Flüssigkeitsbehälters,
- **Fig. 4:**: einen schematisierten Längsschnitt durch einen weiteren schnurlosen Wasserkocher mit einem Betätigungsglied zum zwangsweisen Ausschalten der Heizeinrichtung des Wasserkochers beim Abnehmen desselben von einer Basisstation,
- **Fig. 5:**: eine dreidimensionale Darstellung des Betätigungsgliedes des Wasserkochers der Figur 4,
- **Fig. 6:**: einen Ausschnitt aus der Darstellung des Wasserkochers der Figur 4, darstellend eine Situation beim Abheben des Flüssigkeitsbehälters,
- **Fig. 7:**: einen schematisierten Längsschnitt durch noch einen weiteren schnurlosen Wasserkocher mit einem Betätigungsglied zum zwangsweisen Ausschalten der Heizeinrichtung des Wasserkochers beim Abnehmen desselben von einer Basisstation,
- **Fig. 8:**: einen Schnitt entlang der Linie A-A durch den Wasserkocher der Figur 7 und
- **Fig. 9:**: eine dreidimensionale Darstellung des Betätigungsgliedes des Wasserkochers der Figuren 7 und 8.

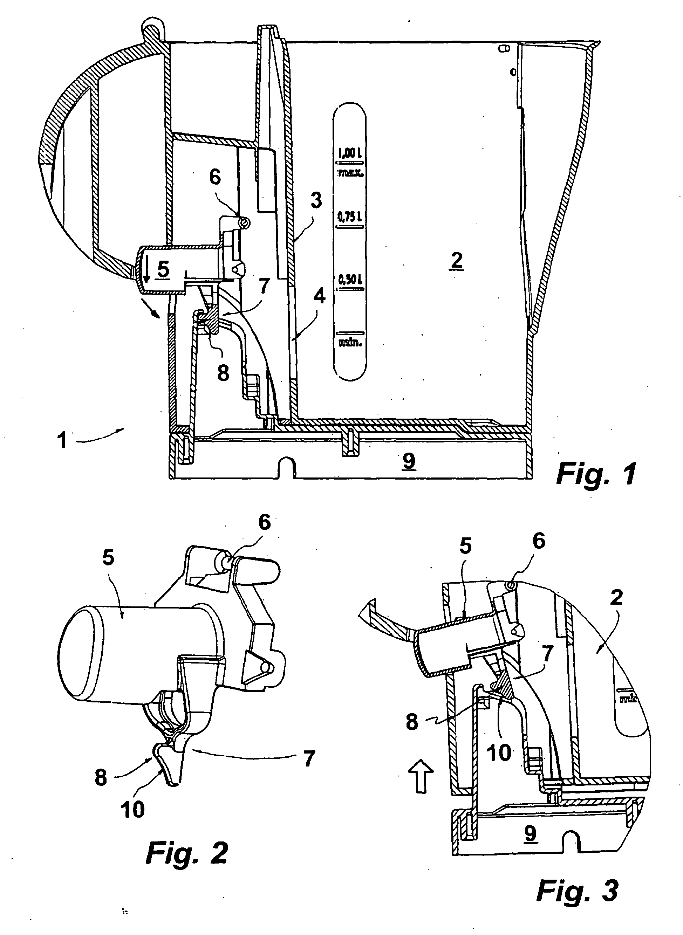

Ein als Vorrichtung zum Erwärmen von Flüssigkeiten dienender nicht erfindungsgemäßer Wasserkocher 1 umfaßt einen Flüssigkeitsbehälter 2 mit einer in den Figuren nicht dargestellten Tauchheizeinrichtung, die angeschlossen ist in eine ebenfalls nicht dargestellte Steuereinheit. Die Tauchheizeinrichtung durchgreift eine Seitenwand 3 des Flüssigkeitsbehälters 2 in einer Durchbrechung 4. An der Außenseite der Flüssigkeitsaufnahme des Flüssigkeitsbhehälters 2 ist die Steuereinheit angeordnet. Diese umfaßt eine Schaltanordnung zum Ein- und Ausschalten der Heizeinrichtung sowie eine Abschaltautomatik zum Abschalten der Heizeinrichtung bei kochender oder fehlender Flüssigkeit. Die Schaltanordnung umfaßt ferner ein Bedienelement 5, das schwenkbar gelagert ist; die Schwenkachse ist in Figur 1 mit den Bezugszeichen 6 gekennzeichnet. Somit ist das Bedienelement 5 entsprechend der in Figur 1 gezeigten Pfeilrichtung schwenkbar. An dem Bedienelement 5 angeformt ist ein Betätigungsglied 7, das bei dem dargestellten Ausführungsbeispiel als Schalthaken konzipiert ist und unterseitig ein nach hinten vorspringendes Hakenelement 8 trägt. Figur 1 zeigt den Flüssigkeitsbehälter 2 des Wasserkochers 1 aufgesetzt auf eine Basisstation 9. Die Basisstation 9 ist an eine Spannungsquelle angeschlossen. Zur Vereinfachung der Darstellung sind die notwendigen elektrischen Steckverbindungsteile, von denen eines dem Flüssigkeitsbehälter 2 und ein weiteres der Basisstation 9 zugeordnet ist, nicht dargestellt. In der in Figur 1 gezeigten Anordnung sind diese beiden Steckverbindungsteile in Eingriff miteinander gestellt, so dass die Heizeinrichtung mit Strom versorgt werden kann. Figur 1 zeigt das Bedienelement 5 und somit die Schalteranordnung in ihrer EIN-Stellung. Zum manuellen Ausschalten der Heizeinrichung ist das Bedienelement 5 nach unten zum unteren Abschluß des Flüssigkeitsbehälters 2 hin zu bewegen, wodurch dieses die oben genannten Verschwenkbewegung ausübt. Das Bedienelement 5 ist in der in Figur 1 gezeigten EIN-Stellung durch eine Rastung gehalten und steht unter einer Federspannung, so dass zum Ausschalten der Schalteranordnung das Bedienelement 5 lediglich über die Rastung hinweggeführt werden muß. Die weitere Ausschaltbewegung erfolgt federkraftunterstützt und somit selbsttätig.

Das Betätigungsglied 7 hintergreift mit seinem Hakenelement 9 einen Hinterschnitt der Basisstation 9, der in dem dargestellten Ausführungsbeispiel in das Dach der Energieversorgungseinheit integriert ist.

Das Bedienelement 5 mit dem darin angeformten Schalthaken 7 und dem Hakenelement 8 ist nochmals in Figur 2 wiedergegeben.

Beim Abheben des Flüssigkeitsbehälters 2 von der Basisstation 9 bewirkt die in Figur gezeigte In-Eingriff-Stellung des Schalthakens 7 bzw. seines Hakenelementes 8 mit der Basisstation 9, dass durch die Abhebebewegung des Flüssigkeitsbehälters 2, die in vertikaler Richtung nach oben vollzogen wird, dass durch das in den Hinterschnitt eingreifende Hakenelement 8 ein Drehmoment auf das Bedienelement 5 ausgeübt wird, so dass dieses über seine Rastfixierung hinweg und in seine in Figur 3 dargestellte AUS-Stellung gebracht wird. Durch diese an die Abhebebewegung mechanisch zwangsgekoppelte Ausschaltung des Bedienelementes 5 erfolgt ebenfalls eine Ausschaltung der mit dem Bedienelement 5 zu betätigenden Schalteranordnung und eine Unterbrechung der Stromversorgung der Heizeinheit. Somit wird der Wasserkocher 1 beim Abheben seines Flüssigkeitsbehälters automatisch ausgeschaltet.

Entsprechendes vollzieht sich beim Aufsetzen des Flüssigkeitsbehälters 2 auf die Basisstation 9, sollte die Schalteranordnung eingeschaltet sein. Zu diesem Zweck ist das Hakenelement 8 des Schalthakens 7 unterseitig mit einer Auflauffläche 10 ausgestattet, so dass auch beim Aufsetzen des Flüssigkeitsbehälters 2 durch das Hakenelement 7 auf das Bedienelement 5 ein Drehmoment zum Ausschalten desselben ausgeübt wird.

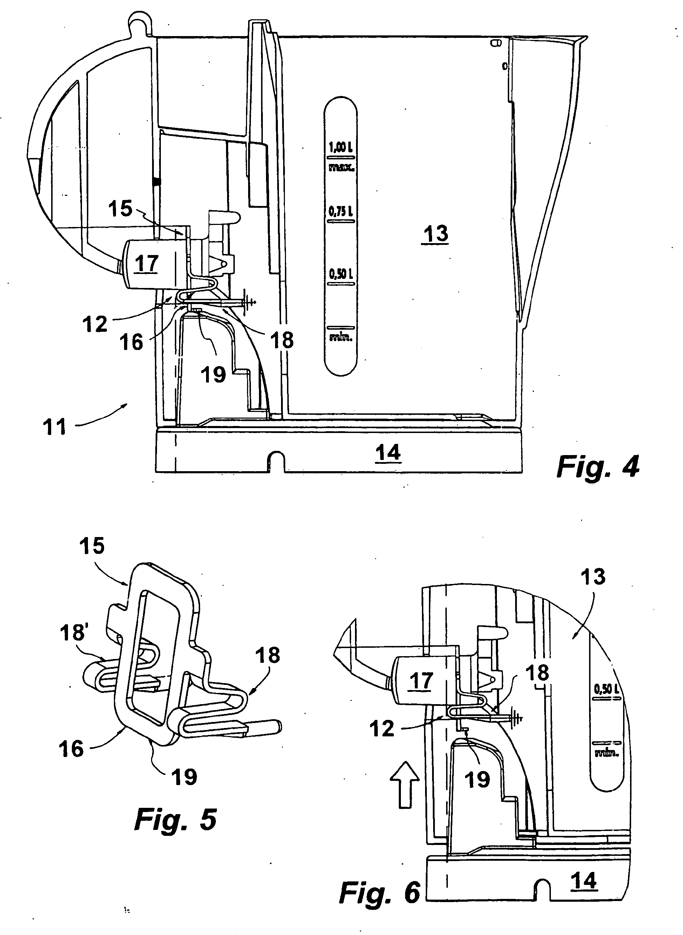

Figur 4 zeigt einen weiteren Wasserkocher 11, der prinzipiell aufgebaut ist wie der Wasserkocher 1 der Figuren 1 bis 3, sich jedoch von diesem durch das vorgesehene Betätigungsglied 12 zum Ausschalten der Heizeinrichtung des Flüssigkeitsbehälters 13 beim Abheben desselben von der Basisstation 14 unterscheidet. Das Betätigungsglied 12 ist nach Art einer Schaltfeder konzipiert, die einen rahmenförmigen Stellabschnitt 15 und einen unteren Abstützabschnitt 16 umfaßt. Der Stellabschnitt 15 umgibt oberseitig das Bedienelement 17 des Flüssigkeitsbehälters 13. Angeformt an den Stellabschnitt 15 sind zwei Federabschnitte 18, 18'. Diese sind mit ihren freien Enden an dem Flüssigkeitsbehälter 13 des Wasserkochers 11 festgelegt, wie dieses in Figur 4 schematisiert wiedergegeben ist. Der Abstützabschnitt 16 stützt sich bei auf der Basisstation 14 aufgesetztem Flüssigkeitsbehälter 13 - wie in Figur 4 dargestellt - auf der Oberseite einer Abdeckung der Energieversorgungseinheit der Basisstation 14 ab. Zu diesem Zweck ist der Abstütztabschnitt unterseitig mit einem Stützfuß 19 ausgestattet. Die Federabschnitte 18, 18' sind als Zugfedern ausgebildet und stehen in der in Figur 4 gezeigten Stellung unter Federvorspannung und sind somit gestreckt. Die Streckung der Federabschnitte 18, 18' erfolgt durch das Aufsetzen des Flüssigkeitsbehälters 13 auf die Basisstation 14, wobei der Stellabschnitt 15 und der Abstützabschnitt 16 relativ zur Festlegung der Federabschnitte 18, 18' am Flüssigkeitsbehälter 13 nach oben bewegt werden.

Die Schaltfeder 12 ist mit ihren Einzelementen nochmals in Figur 5 wiedergegeben.

Beim Abheben des Flüssigkeitsbehälters 13 von der Basisstation 14 löst sich die Abstützung des Stützfußes 19 des Abstützabschnittes 16 der Schaltfeder 12 von der Basisstation 14, so dass sich die Federabschnitte 18, 18' entspannen und durch diese Bewegung der oberseitig über das Bedienelement 17 geführte Stellabschnitt 15 entsprechend der in Figur 6 gezeigten Pfeilrichtung nach unten bewegt wird. Somit wird das Bedienelement 17 in seine AUS-Stellung gebracht und demzufolge die Schalteranordnung der Heizeinrichtung ausgeschaltet.

Bei diesem beschriebenen Ausführungsbeispiel ist eine dauerhafte Einschaltung des Bedienelementes 17 bei von der Basisstation 14 abgenommenem Flüssigkeitsbehälter 13 nicht möglich. Die in den Federabschnitten 18, 18' gespeicherte oder zu speichernde Energie ist in jedem Falle größer als die zum Halten des Bedienelementes 17 in seiner EIN-Stellung durch die Rasteinrichtung benötigte. Erst durch das Abstützen des Abstützabschnittes 16 und des Stellabschnittes 15 der Schaltfeder 12 beim Aufsetzten des Flüssigkeitsbehälters 13 auf die Basisstation 14 wird die durch die Federabschnitte 18, 18' bereitgestellte Rückstellkraft überwunden, wodurch eine Bewegung des Bedienelementes 17 in seine EIN-Stellung ermöglicht ist.

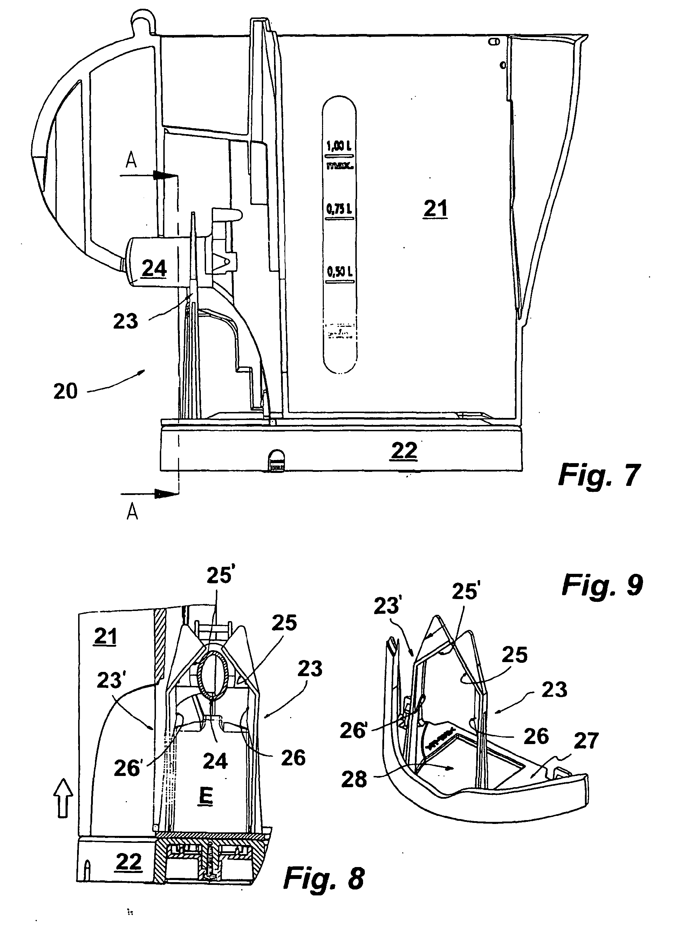

Figur 7 zeigt einen weiteren Wasserkocher 20, dessen Flüssigkeitsbehälter 21 auf einer Basisstation 22 aufgesetzt ist. Als Betätigungsglied dienen bei diesem Ausführungsbeispiel zwei, dem Flüssigkeitsbehälter 21 zugeordnete Schaltrippen 23, 23', die von ihrer Funktion her entsprechend arbeiten wie das Betätigungsglied 12 der Figuren 4 bis 6. Die Schaltrippen 23, 23' sind Teil des Flüssigkeitsbehälters 21 und weisen oberseitig zwei sich über das Bedienelement 24 erstreckende Schaltstege 25, 25' auf. Von den Schaltrippen 23, 23' nach innen zueinander weisend sind ferner - wie in Figur 8 erkennbar - zwei Stellrippen 26, 26' angeformt, die sich bei auf der Basisstation 22 aufgesetztem Flüssigkeitsbehälter 21 an dem Gehäuse der Energieversorgungseinheit E abstützen und aus diesem Grunde nach außen weggedrückt werden. Beim Abheben des Flüssigkeitsbehälters 21 von der Basisstation 22 werden die Schaltrippen 23, 23' infolge fehlender Aufweitung durch die Energieversorgungseinheit E aufeinander zubewegt, so dass sich der zwischen den beiden Schaltstegen 25, 25' befindliche Spalt bezüglich seiner Weite verringert und die Schaltstege 25, 25' an der Oberseite des Bedienelementes 24 zur Anlage kommen und dieses infolge der Schrägstellung der Schaltstege 25, 25' in seine AUS-Stellung bewegen. Durch diese Bewegung wird ebenfalls die Schalteranordnung der Heizeinrichtung ausgeschaltet. Ein Einschalten zumindest dauerhafter Art ist bei diesem Wasserkocher 20 mit abgenommenem Flüssigkeitsbehälter 21 ebenfalls nicht möglich.

Figur 9 zeigt die Schaltrippen 23, 23' des Ausführungsbeispiels der Figuren 7 und 8 mit seinen Einzelteilen. Im Bereich des die Schaltrippen 23, 23' tragenden Fußes 27 ist eine Ausnehmung 28 vorgesehen, in die das Gehäuse der Energieversorgungseinheit E beim, Aufsetzen des Flüssigkeitsbehälters 21 auf die Basisstation 22 eingeführt wird.

### Bezugszeichenliste

- 1: Wasserkocher
- 2: Flüssigkeitsbehälter
- 3: Seitenwand
- 4: Durchbrechung
- 5: Bedienelement
- 6: Schwenkachse
- 7: Betätigungsglied
- 8: Hakenelement
- 9: Basisstation
- 10: Auflauffläche
- 11: Wasserkocher
- 12: Betätigungsglied, Schaltfeder
- 13: Flüssigkeitsbehälter
- 14: Basisstation
- 15: Stellabschnitt
- 16: Abstützabschnitt
- 17: Bedienelement
- 18, 18': Federabschnitt
- 19: Stützfuß
- 20: Wasserkocher
- 21: Flüssigkeitsbehälter
- 22: Basisstation
- 23, 23': Schaltrippe
- 24: Bedienelement
- 25, 25': Schalsteg
- 26, 26': Stellrippe
- 27: Fuß
- 28: Durchbrechung

- E: Energieversorgungseinheit

## Patentansprüche

1. Vorrichtung zum Erwärmen von Flüssigkeiten, umfassend einen Flüssigkeitsbehälter (13, 21) mit einer dem Behälter (13, 21) zugeordneten elektrischen Heizeinrichtung zum Erwärmen von in dem Behälter befindlicher Flüssigkeit, mit einer eine Schalteranordnung zum Ein- und Ausschalten der Heizeinrichtung aufweisenden Steuereinheit und mit einem elektrischen Steckverbindungsteil zum lösbaren Kontaktieren eines Gegensteckverbindungsteil sowie umfassend eine das Gegensteckverbindungsteil tragende Basisstation (14, 22), wobei die Schalteranordnung ein durch eine parallel zur Längsachse des Behälters verlaufende Schaltbewegung manuell betätigbares und in Richtung zum unteren Abschluß des Behälters (13, 21) in seine AUS-Stellung schaltbares Bedienelement (17, 24) umfasst und mit einem auf das Bedienelement (17, 24) mechanisch einwirkenden Betätigungsglied (12, 23, 23') dergestalt ausgestattet ist, dass bei einem Abheben des Behälters (13, 21) von der Basisstation (17, 24) der Schalteranordnung durch eine an die Abhebebewegung des Behälters (13, 21) zwangsgekoppelte Bewegung des Betätigungsgliedes (12, 23, 23') das Bedienelement (17, 24) in seine AUS-Stellung bewegt und demzufolge die Schalteranordnung in ihre AUS-Stellung geschaltet wird, **dadurch gekennzeichnet, dass** als Betätigungsglied eine Schaltfeder (12) vorgesehen ist, die sich bei auf der Basisstation (14) aufgesetztem Behälter (13) an der Basisstation (14) abstützt und durch diese Abstützung in ihrer gespannten Stellung gehalten ist, wobei durch deren gespeicherte Energie bei einem Abheben des Behälters (13) von der Basisstation (14) das Bedienelement (17) in seine AUS-Stellung geschaltet wird.

2. Vorrichtung nach Anspruch 1, **dadurch gekennzeichnet, dass** die Schaltfeder (12) einen das Bedienelement (17) oberseitig umgreifenden und unterseitig einen Abstützabschnitt (16) aufweisenden Stellabschnitt (15) umfaßt, an dem zumindest ein mit seinem freien Ende am Behälter (13) festgelegter Federabschnitt (18) mit in Richtung der Längserstreckung des Stellabschnittes (15) wirkenden Federeigenschaften angeformt ist.

3. Vorrichtung nach Anspruch 2, **dadurch gekennzeichnet, dass** zwei Federabschnitte (18, 18') vorgesehen sind.

4. Vorrichtung zum Erwärmen von Flüssigkeiten, umfassend einen Flüssigkeitsbehälter (13, 21) mit einer dem Behälter (13, 21) zugeordneten elektrischen Heizeinrichtung zum Erwärmen von in dem Behälter befindlicher Flüssigkeit, mit einer eine Schalteranordnung zum Ein- und Ausschalten der Heizeinrichtung aufweisenden Steuereinheit und mit einem elektrischen Steckverbindungsteil zum lösbaren Kontaktieren eines Gegensteckverbindungsteil sowie umfassend eine das Gegensteckverbindungsteil tragende Basisstation (14, 22), wobei die Schalteranordnung ein durch eine parallel zur Längsachse des Behälters verlaufende Schaltbewegung manuell betätigbares und in Richtung zum unteren Abschluß des Behälters (13, 21) in seine AUS-Stellung schaltbares Bedienelement (17, 24) umfasst und mit einem auf das Bedienelement (17, 24) mechanisch einwirkenden Betätigungsglied (12, 23, 23') dergestalt ausgestattet ist, dass bei einem Abheben des Behälters (13, 21) von der Basisstation (17, 24) der Schalteranordnung durch eine an die Abhebebewegung des Behälters (13, 21) zwangsgekoppelte Bewegung des Betätigungsgliedes (12, 23, 23') das Bedienelement (17, 24) in seine AUS-Stellung bewegt und demzufolge die Schalteranordnung in ihre AUS-Stellung geschaltet wird, **dadurch gekennzeichnet, dass** als Betätigungsglied zumindest eine der Basisstation zugeordnete und in Querreichtung zur Abhebebewegung des Behälters (21) von der Basisstation (22) federelastische Schaltrippe (23) vorgesehen ist, die bei auf der Basisstation (22) aufgesetztem Behälter (21) das Bedienelement (24) oberseitig zumindest teilweise übergreift, wobei die durch die Schaltrippe (23) bereitgestellten, auf das Bedienelement (24) bei einer Abhebebewegung des Behälters (21) von der Basisstation (22) einwirkenden Kräfte größer sind als die zum Bewegen und Belassen des Bedienelementes (24) in seiner EIN-Stellung benötigten.

5. Vorrichtung nach Anspruch 4, **dadurch gekennzeichnet, dass** zwei Schaltrippen (23, 23') vorgesehen sind.

6. Vorrichtung nach Anspruch 4 oder 5, **dadurch gekennzeichnet, dass** die Schaltrippe (23, 23') ein Kunststoffteil ist.

## Claims

1. Device for heating liquids, comprising a liquid container (13, 21) having an electrical heating mechanism associated with the container (13, 21) for heating liquid situated in the container, having a control unit which has a switch arrangement for switching the heating device on and off and having an electrical plug connection part for detachable contacting of a counter-plug connection part and comprising a base station (14, 22) which carries the counter-plug connection part, the switch arrangement comprising an operating element (17, 24) which can be operated manually by a switching movement extending parallel to the longitudinal axis of the container and can be switched in the direction towards the lower end of the container (13, 21) into its OFF position and being equipped with an actuation member (12, 23, 23') which acts mechanically on the operating element (17, 24) such that, during lifting of the container (13, 21) from the base station (17, 24) of the switch arrangement, the operating element (17, 24) is moved into its OFF position by means of a movement of the actuation member (12, 23, 23') which is necessarily coupled to the lifting movement of the container (13, 21) and as a result the switch arrangement is switched into its OFF position, **characterised in that** a switch spring (12) is provided as operating element which is supported on the base station (14) when the container is placed upon the base station (14) and is maintained in its tensioned position by means of this support, the operating element (17) being switched into its OFF position by means of the stored energy thereof during lifting of the container (13) from the base station (14).

2. Device according to claim 1, **characterised in that** the switch spring (12) comprises an adjustment portion (15) which encompasses the operating element (17) at the top and has a support portion (16) at the bottom, on which adjustment portion there is moulded on at least one spring portion (18) which is fixed by its free end on the container (13) and has spring properties which act in the direction of the longitudinal extension of the adjustment portion (15).

3. Device according to claim 2, **characterised in that** two spring portions (18, 18') are provided.

4. Device for heating liquids, comprising a liquid container (13, 21) having an electrical heating mechanism associated with the container (13, 21) for heating liquid situated in the container, having a control unit which has a switch arrangement for switching the heating device on and off and having an electrical plug connection part for detachable contacting of a counter-plug connection part and comprising a base station (14, 22) which carries the counter-plug connection part, the switch arrangement comprising an operating element (17, 24) which can be operated manually by a switching movement extending parallel to the longitudinal axis of the container and can be switched in the direction towards the lower end of the container (13, 21) into its OFF position and being equipped with an actuation member (12, 23, 23) which acts mechanically on the operating element (17, 24) such that, during lifting of the container (13, 21) from the base station (17, 24) of the switch arrangement, the operating element (17, 24) is moved into its OFF position by means of a movement of the actuation member (12, 23, 23') which is necessarily coupled to the lifting movement of the container (13, 21) and as a result the switch arrangement is switched into its OFF position, **characterised in that** at least one switch rib (23) is provided as operating element which is associated with the base station and resilient in the transverse direction relative to the lifting movement of the container (21) from the base station (22), which rib engages over the operating element (24) at least partially at the top when the container (21) is placed upon the base station (22), the forces which are provided by the switch rib (23) and act upon the operating element (24) during a lifting movement of the container (21) from the base station (22) being greater than those required for moving and retaining the operating element (24) in its ON position.

5. Device according to claim 4, **characterised in that** two switch ribs (23, 23') are provided.

6. Device according to claim 4 or 5, **characterised in that** the switch rib (23, 23') is a plastic material part.

## Revendications

1. Dispositif pour le chauffage de liquides comprenant un récipient à liquide (13, 21) avec un équipement chauffant électrique affecté à un récipient (13, 21) pour le chauffage de liquide se trouvant dans le récipient, avec une unité de commande présentant un module de commutation pour mettre en marche et à l'arrêt l'équipement chauffant et avec un connecteur électrique enfichable pour établir un contact amovible avec un connecteur enfichable complémentaire et comprenant également une station de base (14, 22) supportant le connecteur enfichable complémentaire, le module de commutation comprenant un élément de commande (17, 24) pouvant être commuté dans sa position ARRÊT et actionné manuellement par un mouvement de commutation orienté parallèlement à l'axe longitudinal du récipient et vers l'extrémité inférieure du récipient (13, 21) et équipé d'un élément d'actionnement (12, 23, 23') agissant mécaniquement sur l'élément de commande (17, 24) de telle sorte que lors du prélèvement du récipient (13, 21) de la station de base (17, 24), le module de commutation place l'élément de commande (17, 24) dans sa position ARRÊT par un mouvement de l'élément d'actionnement (12, 23, 23') couplé de force au mouvement de prélèvement du récipient (13, 21) et que le module de commutation se trouve ainsi commuté dans sa position ARRÊT **caractérisé en ce qu'**il est prévu en tant qu'élément d'actionnement un ressort de contact (12) qui s'appuie sur la station de base (14), lorsque le récipient (13) est déposé sur la station de base (14) et qu'il est maintenu par cet appui dans sa position tendue, l'énergie accumulée commutant l'élément de commande (17) dans sa position ARRÊT lors du prélèvement du récipient (13) de sa station de base (14).

2. Dispositif selon la revendication 1 **caractérisé en ce que** le ressort de contact (12) comprend un tronçon de positionnement (15) englobant par le dessus l'élément de commande (17) et présentant sur le dessous un tronçon d'appui (16), sur lequel est moulé au moins un tronçon à ressort (18), maintenu par son extrémité libre au récipient (13), possédant des propriétés élastiques agissant dans le sens de l'étendue longitudinale du tronçon de positionnement (15).

3. Dispositif selon la revendication 2 **caractérisé en ce qu'**il est prévu deux tronçons à ressort (18, 18').

4. Dispositif pour le chauffage de liquides comprenant un récipient à liquide (13, 21) avec un équipement chauffant électrique affecté à un récipient (13, 21) pour le chauffage de liquide se trouvant dans le récipient, avec une unité de commande présentant un module de commutation pour mettre en marche et à l'arrêt l'équipement chauffant et avec un connecteur électrique enfichable pour établir un contact amovible avec un connecteur enfichable complémentaire et comprenant également une station de base (14, 22) supportant le connecteur enfichable complémentaire, le module de commutation comprenant un élément de commande (17, 24) pouvant être commuté dans sa position ARRÊT et actionné manuellement par un mouvement de commutation orienté parallèlement à l'axe longitudinal du récipient et vers l'extrémité inférieure du récipient (13, 21) et équipé d'un élément d'actionnement (12, 23, 23') agissant mécaniquement sur l'élément de commande (17, 24) de telle sorte que lors du prélèvement du récipient (13, 21) de la station de base (17, 24), le module de commutation place l'élément de commande (17, 24) dans sa position ARRÊT par un mouvement de l'élément d'actionnement (12, 23, 23') couplé de force au mouvement de prélèvement du récipient (13, 21) et que le module de commutation se trouve ainsi commuté dans sa position ARRÊT **caractérisé en ce qu'**il est prévu en tant qu'élément d'actionnement au moins une languette de contact (23) élastique affectée à la station de base et orientée transversalement au mouvement de prélèvement du récipient (21) de la station de base (22) qui surmonte au moins partiellement par le dessus l'élément de commande (24) lorsque le récipient (21) est déposé sur la station de base (22), les forces ainsi mises à disposition par la languette de contact (23) et agissant sur l'élément de commande (24) lors du mouvement de prélèvement du récipient (21) de la station de base (22) étant plus importantes que celles nécessaires pour déplacer et laisser l'élément de commande (24) dans sa position MARCHE.

5. Dispositif selon la revendication 4 **caractérisé en ce qu'**il est prévu deux languettes de contact (23, 23').

6. Dispositif selon la revendication 4 ou 5 **caractérisé en ce que** la languette de contact (23, 23') est une pièce en plastique.
